# EUROPÄISCHE PATENTSCHRIFT

(11) **EP 0 374 454 B1**
(45) Veröffentlichungstag und Bekanntmachung des Hinweises auf die Patenterteilung: **20.04.1994**
(21) Anmeldenummer: 89120662.5
(22) Anmeldetag: 08.11.1989
(51) Int. Cl.: H02K 15/04

(54) **Herstellungsverfahren und -gerät für den Anker einer Maschine, insbesondere eines Scheibenläufermotors**
Method and equipment for manufacturing an electric motor, especially a disk motor
Procédé et matériel de fabrication d'un moteur électrique, en particulier moteur à rotor en forme de disque

(30) Priorität: 19.12.1988 DE 3842735
(43) Veröffentlichungstag der Anmeldung: 27.06.1990
(73) Patentinhaber: BAUMÜLLER NÜRNBERG GMBH, D-90482 Nürnberg (DE)
(72) Erfinder: Grüneberg, Helmut Dipl.-Ing.(FH), D-3360 Osterode (DE); Heinz, Hubert, D-3202 Bad Salzdetfurth (DE); Ernst, Wolfgang, D-3353 Bad Gandersheim (DE)
(74) Vertreter: Matschkur, Götz, Lindner Patent- und Rechtsanwälte

(56) Entgegenhaltungen:
- DE-A-03 422 933
- JP-A-61 240 840
- PATENT ABSTRACTS OF JAPAN, Band 12, Nr. 162 (E-609)(3009), 17 Mai. 1988 ; & JP-A-62 272 845
- PATENT ABSTRACTS OF JAPAN, Band 5, Nr. 198 (E-87)(870), 16. Dezember 1981 ; & JP-A-56 121 359
- PATENT ABSTRACTS OF JAPAN, Band 8, NR. 167 (E-259)(1604), 2. August 1984 ; & JP-A-59 63 955
- PATENT ABSTRACTS OF JAPAN, Band 11, Nr. 346 (E-556)(2793), 12. November 1987 ; & JP-A-62 126 843

## Beschreibung

Die Erfindung betrifft ein Verfahren zur Herstellung eines aus lackierten Drähten gewickelten Ankers für eine elektrische Maschine, insbesondere Scheibenläufermotor, sowie einen Formbehälter und eine Wickelschablone, die jeweils zur Verwendung in diesem Herstellungsverfahren ausgebildet sind.

Derartige Anker sind bei sogenannten Wire-Wound-Motoren anzutreffen, bei denen die Ankerwicklung aus handelsüblichen Lackdrähten (in der Regel Runddraht) gewickelt ist. Für in Serie mit hohen Stückzahlen gefertigte Elektromotoren werden diese Ankerwicklungen maschinell hergestellt. Bei Mustermotoren und in Kleinserien gefertigten Motoren sind sogenannte Wildwicklungen üblich, d. h. die Wicklungen werden von Hand in Nagelschablonen geschaffen.

In beiden Fällen ist die erzielbare Packungsdichte (Kupferfüllung des Ankers) relativ niedrig. Vor allem bei mit Gleichstrom gespeisten Scheibenläufermotoren, bei denen der Anker eine großflächig ausgedehnte Scheibenform besitzt, läßt die nach herkömmlichen Herstellungsmethoden erzielbare Packungsdichte zu wünschen übrig. Von ihr hängen aber die Kupferverluste in der Ankerscheibe und damit die erzielbare Leistung und der Wirkungsgrad des Motors in entscheidendem Maße ab.

Es ist bekannt (GB 1 096 696), für einen Gleichstrommotor eine Formspulenanordnung herzustellen, indem um ein zylindrisches Formteil Drähte in hexagonaler Form gewickelt werden. Durch die dabei entstehenden Hexagonalspulen wird ein elektrischer Stromfluß erzeugt, der zur Aufheizung der Spulen und zum Verschmelzen der Beschichtungen benachbarter Kupferdrähte miteinander führt (Verbacken). Danach werden die einzelnen Spulen mit Hilfe eines Seidenfadens zusammengeschnürt und mittels einer zusätzlich zugeführten Bindemittellösung verbunden, an einen Kommutator angeschlossen und mit Polyesterharz gekapselt. Die dabei entstehende Ankerform ist allerdings für die flache Bauweise von Scheibenläufermotoren ungeeignet.

Aus der japanischen Patentveröffentlichung JP-61 240 840 A (Anmeldenummer 60-79 060) ist die auf Scheibenläufermotoren ausgerichtete Anordnung von Einzelspulen, die dabei einander überlappen, bekannt. Im Formbehälter werden die Einzelspulen mit einem Bindemittel, das auf UV-Strahlung anspricht, beschichtet, und dann mit einer UV-Strahlung abgebenden Lampe bestrahlt. Dadurch werden die Einzelspulen zu einer flachen scheibenförmigen Konfiguration entsprechend dem Anker eines Scheibenläufermotors verbunden.

Auch in der US-A-3 906 622 wird zur Herstellung von Elektromotoren mit flach ausgebildeten Wicklungen vorgeschlagen, eine Ankerspule durch aufeinanderlegen einer Mehrzahl von Einzelspulen, die jeweils aus einem Bündel vieler Drähte bestehen, zu bilden; die Einzelspulen bestehen aus bei Erwärmung selbstbindenden Drähten. Die so geformte Anker-Gesamtspule wird in einen zweiteiligen geschlossenen Formbehälter mit Bodenteil und Deckelteil gelegt, wobei deren Oberfläche mit einem mit Kunstharz imprägniertem Gewebe abgedeckt wird. Der Deckelteil des Formbehälters enthält eine Einspritzöffnung, in die mittels Druck Epoxydharz zum Vergießen der Anker-Gesamtspule unter Druck eingespritzt wird. Das imprägnierte Gewebe aus Glasfasern dient dabei zur Verteilung des eingespritzten Harzes unterhalb der Einspritzöffnung.

Bei einer bekannten Vorrichtung (DE-A-34 22 933) zur Herstellung einer Ankerwicklung für einen flachen Elektromotor wird Wickeldraht mit einem Klebeüberzug verwendet, der schmilzt, wenn er von einer Heizeinrichtung erhitzt wird. Dadurch verbinden sich benachbarte Abschnitte der um einen Spulenkörper gewickelten Drähte, wobei eine flache Wicklungseinheit gebildet wird. Hierzu wird ein sogenannter Flyer verwendet, der den Wickelstrang vielfach flach um einen Spulenkörperkern wickeln kann. Allerdings sind keine Maßnahmen vorgesehen, um benachbarte Einzelspulen dicht zusammenzuhalten.

Hierzu findet sich aus der japanischen Patentveröffentlichung JP-A-62-272 845 ein Hinweis dahingehend, jeweils zwei Wicklungseinheiten bzw. Einzelspulen auf einer Montageplatte teilweise übereinanderzulegen und mit einem Stromfluß zu durchsetzen, so daß einander benachbarte Wicklungen erwärmt und einstückig verschmolzen werden. Allerdings sind in der jeweiligen Einzelspule die einzelnen Drähte nicht gut in ihrer Lage gehalten und geordnet, so daß sich eine relativ niedrige Füllungsdichte pro Einzelspule ergibt, die eine zu hohe Läuferdicke verursacht.

Aus der japanischen Patentveröffenmtlichung JP-A-59-63 955 ist eine Wickelschablone mit einer mittig durchgehenden Naht ersichtlich.

Bei allen genannten Herstellungsmethoden ist jedoch nicht in befriedigender Weise für eine hohe Packungsdichte bzw. Kupferfüllung gleichzeitig in der Einzelspule und im Anker des Elektromotors Sorge getragen, woraus sich Nachteile hinsichtlich Leistung und Wirkungsgrad des Motors ergeben. Mithin besteht das der Erfindung zugrundeliegende Problem darin, für elektrische Maschinen einen Anker herzustellen, der sich durch eine außerordentlich hohe Kupferfüllungsdichte und - damit verbunden - eine hohe Leistungsdichte auszeichnet. Die erfindungsgemäß vorgeschlagene Lösung ist im Patentanspruch 1 angegeben. Vorteilhafte Ausbildungen des für dieses Herstellungsverfahren verwendeten Geräts ergeben sich aus den nachfolgenden Ansprüchen.

Hiernach wird die Ankerwicklung aus Einzelspulen aufgebaut, die zunächst mit kleinstmöglicher Wicklungslänge aus exakt parallel geführten, mit Backlack beschichteten Drähten auf einen Schablonenkern gewickelt werden. Die einzelnen, einander berührenden Drahtwindungen werden dann unter Wärmeeinfluß miteinander verbacken, d. h. der auf der Drahtoberfläche befindliche Lack wird zum Verlaufen gebracht, so daß die Beschichtungen der benachbarten Drahtwindungen ineinanderfließen und nach Erstarrung einen festen, mechanischen Zusammenhalt erzeugen. Etwaige, beim Wickelvorgang zwischen benachbarten Drahtwindungen verbliebene Hohlräume werden durch Preßdruck beim Verbacken der Drahtwindungen beseitigt, was zu einer Erhöhung der Packungsdichte der Einzelspule führt. Beim weiteren Herstellungsschritt werden die so dicht mit Kupfer gefüllten Spulen nach Entfernen der Schablonen zu einer dem Anker entsprechenden Form angeordnet. Die schnelle und gezielte Anordnung der Einzelspulen erleichtert der erfindungsgemäß verwendete, nach oben offene Topf als Formbehälter. Sie werden darin eingelegt und gegebenfalls dort mit dem Kommutator verschaltet und dann ebenfalls verbacken.

Indem vorzugsweise der Formbehälter in kreiszylindrischer, nach oben offener und vorzugsweise flacher Form ausgeführt ist, können Ankerwicklungen leicht in Scheibenform angefertigt werden, welche zum Einbau in Gleichstrom-Scheibenläufermotoren geeignet sind.

Wichtig ist bei der Herstellung von Ankerwicklungen für Gleichstrommotoren, daß die Wicklungen möglichst gleichmäßig bzw. symmetrisch um die Drehachse herum verteilt angeordnet sind, um Unwucht zu vermeiden und einen homogenen Verlauf des Läufer-Trägheitsmomentes zu erzielen, damit ein ruhiger Motorlauf gegeben ist. Diesem Problem nimmt sich die Erfindung dadurch an, daß der Boden des Formbehälters mit vorzugsweise gelochten Markierungen versehen ist, deren Anordnung der der Einzelspulen bzw. Wicklungen entspricht. Anhand dieser Markierungen lassen sich die Einzelspulen schnell und präzise in die richtige Relativlage zueinander bringen.

Im Rahmen der Erfindung ist die Schablone, vor allem wenn sie bei der Herstellung den Wicklungskern bildet, aus zwei separaten Teilen lose zusammengesetzt, d. h. nach beendeter Wicklung der Einzelspule kann zuerst der erste Teil und dann der zweite Teil aus dem Spuleninnenraum entfernt werden. Der damit erzielte Vorteil besteht gegenüber einer einteiligen Schablone darin, daß sich die fertig gestellte Einzelspule nach Entfernen der geteilten Schablone leichter von der Form befreien läßt.

Der mit dem erfindungsgmäßen Herstellungsverfahren erzeugte Anker in Scheibenform, gewickelt aus lackierten Drähten, weist eine besonders hohe Kupferpackungsdichte auf: Eine Mehrzahl von Einzelspulen ist längs einer zur Drehachse der elektrischen Maschine konzentrischen Kreislinie angeordnet und durch Verbacken der Einzelspulen aneinandergehalten, wobei die angestrebte Scheibenform gebildet ist. Bei dieser Anordnung läßt sich eine besonders hohe Anzahl an separat hergestellten Einzelspulen verwenden, so daß aufgrund der damit verbundenen hohen Packungsdichte beim Betrieb dieser Ankerscheibe die Kupferverluste erniedrigt sind. Mit dem erfindungsgemäßen Herstellungsverfahren wird ferner der Vorteil erzielt, daß bei der erzeugten Ankerscheibe bereits die Einzelspulen hinsichtlich Kupfer-Packungsdichte optimiert sind, und so Energieverluste erniedrigt bzw. der Wirkungsgrad erhöht sind. Indem der Zusammenhalt der Einzelspulen dann ebenfalls durch Verbacken bewerkstelligt wird, sind weitere Hilfsmittel, wie z. B. ein Trägerkörper für die Einzelspulen, welcher den Kupferanteil im Anker vermindern würde, nicht notwendig.

Es dient der Verminderung der Dicke der Ankerscheibe, wenn aufgrund des erfindungsgemäßen Herstellungsverfahrens alle Windungen einer Einzelspule lagenweise über- bzw. nebeneinander angeordnet sind. Damit läßt sich für die Einzelspule quer zu deren magnetischer Flußrichtung eine flache und in magnetischer Flußrichtung schmale Bauform erzielen. Derart ausgebildete Einzelspulen sind dann nebeneinander oder - mit besonderem Vorteil - einander jeweils dachziegelartig überlappend angeordnet. Es liegt auf der Hand, daß vor allem im letzteren Fall die so gestaltete Ankerscheibe eine besonders hohe Konzentration an Kupfer aufweist, womit niedrige Stromwärmeverluste und hoher Wirkungsgrad erreicht werden können.

Weitere Merkmale, Einzelheiten und Vorteile der Erfindung ergeben sich aus der folgenden Beschreibung einer bevorzugten Herstellungsform der Erfindung sowie anhand der Zeichnung. Hierbei zeigen:
- Fig. 1: eine um eine Schablone gewickelte Einzelspule,
- Fig. 2: eine Stirnansicht auf den wesentlichen Teil einer erfindungsgemäßen Ankerscheibe, und
- Fig. 3: Schnittansicht gemäß der Linie III-III in Fig. 2.

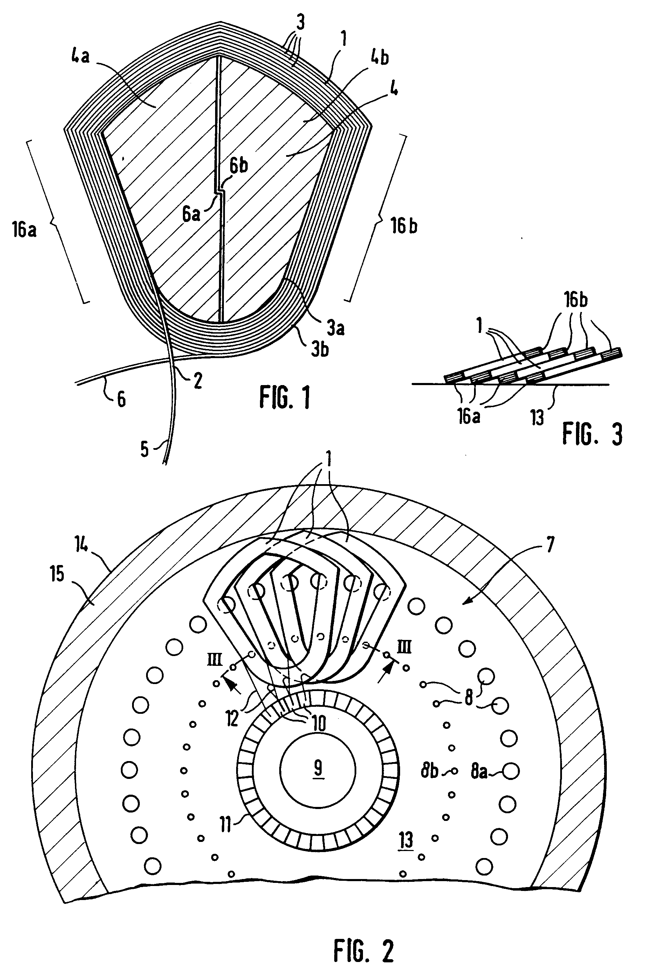

Gemäß Fig. 1 ist eine Einzelspule 1 dadurch gebildet, daß ein längerer Abschnitt eines mit Backlack beschichteten Drahtes 2 in jeweils über - bzw. nebeneinander liegenden Lagen 3 um einen Schablonenkörper 4 mit einem bestimmten Profil gewickelt wird. Jeder Lage 3 entspricht eine den Schablonenkörper 4 vollständig umlaufende Drahtwicklung. Der Anfang 5 des Drahtes 2, der von der Einzelspule 1 nach außen führt, geht in die innerste, zuerst gebildete Lage 3a über, während das Ende 6 des Drahtes 2 einen frei nach außen vorstehenden Auslauf der äußersten Lage 3b bildet. Wie aus Fig. 1 ersichtlich, sind zur Erzielung einer optimalen Drahtkupferdichte die Lagen 3 und deren Windungen in kleinstmöglicher Windungslänge nahezu exakt parallel geführt. Um nach Fertigstellung der Einzelspule 1 die Demontage des Schablonenkörpers 4 zu erleichtern, ist dieser aus zwei gesonderten Teilen 4a, 4b zusammengesetzt. Zum formrichtigen Halt dieser beiden Teile 4a, 4b sind deren einander gegenüberliegende, zugeordnete Seiten mit zueinander komplementär ausgebildeten Montageabstufungen 6a, 6b versehen.

Das in Fig. 2 schematisch gezeichnete Ausführungsbeispiel bezieht sich auf eine Ankerscheibe 7 mit sechsunddreißig kreisringförmig angeordneten Einzelspulen 1. Dieser Anordnung entsprechen sechsunddreißig um die Drehachse der Ankerscheibe konzentrisch angeordnete Lochmarkierungen 8. Gemäß Fig. 2 sind Lochmarkierungen unterschiedlicher Größe vorgesehen, wobei die kreisförmig verlaufende Reihe mit den größeren Lochmarkierungen 8a gegenüber der entsprechend gebildeten Reihe mit den kleineren Lochmarkierungen 8b radial nach außen versetzt ist. Im Zentrum der Ankerscheibe 7 ist eine Hohlwelle 9 ausgebildet, um welche konzentrisch die einzelnen, aneinander gefügten Lamellen 10 eines Kommutators 11 plaziert sind. Mit diesem sind die Einzelspulen 1 durch Schaltdraht 12 elektrisch verbunden.

Die aus Fig. 2 ersichtlichen Lochmarkierungen 8 sind durch entsprechende Aussparungen im Bodenteil 13 eines Justier-Formbehälters 14 geschaffen, der eine nach oben (senkrecht zur Zeichenebene) offene und einem rundem Hohlzylinder ähnliche Form (Topfform) besitzt. Dessen Wand 15 ist in Fig. 2 im Schnitt (gestrichelt) dargestellt.

Die Anordnung der Einzelspulen 1 erfolgt bei Verwendung des Formbehälters 14 entlang der Lochmarkierungen 8. Dabei sind die Einzelspulen ineinander greifend und sich überlappend angeordnet. Dies wird insbesondere aus der Schnittdarstellung der Fig. 3 deutlich: Darin sind die paarweise zusammengehörigen Schenkel 16a, 16b der Einzelspulen 1 in ihren Querschnitten sichtbar. Diese Abschnitte sind mit einem Teil der Außenkontur des Schablonenkörpers 4 kongruent. Da jede Einzelspule 1 eine benachbarte teilweise (dachziegelartig) überlappt, bilden deren linke Spulenseiten 16a jeweils eine untere Kupferschicht, während deren rechte Spulenseiten 16b jeweils eine obere Kupferschicht bilden. Mit dieser Art der Anordnung der Einzelspulen wird in platzsparender Weise eine hohe Kupferdichte für die Ankerscheibe 7 gewonnen.

## Patentansprüche

1. Verfahren zur Herstellung eines mit lackierten Drähten bewickelten Ankers für eine elektrische Maschine, insbesondere einen mit Gleichstrom betriebenen Scheibenläufermotor, wobei mehrere Einzelspulen (1) aus mit adhäsivem Material beschichteten Drähten (2) gebildet werden, indem diese jeweils in möglichst kurzen unmittelbar aneinanderliegenden Lagen und/oder Windungen (3) auf eine Schablone (4) gewickelt und dort verbacken werden, und nach Entfernung der Schablone(n) (4) die Einzelspulen (1), gegebenenfalls mit einem Kommutator, in einen Formbehälter (14) eingelegt, dort verschaltet und miteinander verbacken und/oder zum fertigen Anker (7) vergossen werden.

2. Verfahren nach Anspruch 1, wobei die Einzelspulen (1), wenn sie für sich verbacken werden, Preßdruck zur Beseitigung von Hohlräumen und/oder Herbeiführung einer Parallellage der Spulendrähte (2) ausgesetzt werden.

3. Verfahren nach Anspruch 1 oder 2, wobei die Einzelspulen (1) im Formbehälter (14) ineinandergreifend und sich überlappend angeordnet sind.

4. Topf als Formbehälter (14) zur Durchführung des Verfahrens nach Anspruch 1, 2 oder 3, gekennzeichnet durch eine flache, kreiszylindrische und nach oben offene Form mit einem Bodenteil (13), wobei der Bodenteil (13) des Formbehälters (14) mit vorzugsweise gelochten Markierungen (8) versehen ist, deren Anordnung der der Einzelspulen (1) entspricht.

5. Wickelschablone zur Durchführung des Verfahrens nach Anspruch 1, 2 oder 3, wobei die Drähte (2) der Einzelspule (1) längs der Schablone (4) gewickelt und dort verbacken werden, und die Schablone (4) aus zwei separaten Teilen (4a, 4b) lösbar zusammengesetzt ist, dadurch gekennzeichnet, daß einander gegenüberliegende Seiten der separaten Teile (4a, 4b) zueinander komplementär ausgebildete Montageabstufungen (6a, 6b) aufweisen.

## Claims

1. Method of manufacturing an armature wrapped in enamelled wires for an electric motor, in particular a disc rotor motor operated with direct current, wherein a plurality of individual coils (1) are formed of wires (2) coated with adhesive material, these being wound on to a template (4) in the shortest possible, directly abutting layers and/or windings (3) and are baked on, and after removal of the template(s) (4) the individual coils (1), optionally with a commutator, are inserted into a mould container (14), are connected therein and baked together and/or are cast into the finished armature (7).

2. Method according to claim 1, wherein the individual coils (1), if baked individually, are subjected to pressure to eliminate gaps and/or to produce a parallel position of the coil wires (2).

3. Method according to claim 1 or 2, wherein the individual coils (1) are arranged in the mould container (14) in an interlocking, overlapping manner.

4. Pot acting as a mould container (14) for carrying out the method according to claim 1, 2 or 3, characterised by a flat, circular cylindrical mould, open at the top and having a bottom part (13), wherein the bottom part (13) of the mould container (14) is provided with preferably pierced markings (8), whose arrangement corresponds to that of the individual coils (1).

5. Winding template for carrying out the method according to claim 1, 2 or 3, wherein the wires (2) of the individual coil (1) are wound along the template (4) and are baked thereon, and the template (4) is detachably composed of two separate parts (4a, 4b), characterised in that opposite sides of the separate parts (4a, 4b) have mutually complementary mounting steps (6a, 6b).

## Revendications

1. Procédé pour fabriquer un induit, bobiné avec des fils laqués, pour une machine électrique, notamment un moteur à rotor en forme de disque alimenté en courant continu, selon lequel, on forme plusieurs bobines individuelles (1) avec des fils (2) recouverts d'un matériau adhésif, en enroulant ces fils respectivement suivant des couches et/ou des spires (3) aussi courtes que possible et directement juxtaposées les unes contre les autres, sur un gabarit (4) et en les fixant par cuisson sur ce dernier, puis, après élimination du ou des gabarits (4), on insère les bobines individuelles (1), éventuellement avec un collecteur, dans un récipient de moulage (14), on les raccorde à l'intérieur de ce récipient et on les réunit en les fixant par cuisson et/ou on les enrobe pour former l'induit terminé (7).

2. Procédé selon la revendication 1, selon lequel, lorsque les bobines individuelles (1) sont fixées par cuisson chacune pour elle même, on les soumet à une pression de pressage pour éliminer les cavités et/ou obtenir une disposition parallèle des fils (2) des bobines.

3. Procédé selon la revendication 1 ou 2, selon lequel les bobines individuelles (1) sont disposées de manière à être imbriquées les unes dans les autres et à se chevaucher dans le récipient de moulage (14).

4. Pot réalisé en tant que récipient de moulage (14) pour la mise en oeuvre du procédé selon la revendication 1, 2 ou 3, caractérisé par une forme de cylindre circulaire plat, ouvert vers le haut comportant un élément de fond (13), l'élément de fond (13) du récipient en forme de moule (14) étant équipé de marques (8) de préférence perforées, dont la disposition correspond à celle des bobines individuelles (1).

5. Gabarit d'enroulement pour la mise en oeuvre du procédé selon la revendication 1, 2 ou 3, dans lequel les fils (2) des bobines individuelles (1) sont enroulés le long du gabarit (4) et y sont fixés par cuisson, et le gabarit (4) est formé par l'assemblage amovible de deux parties séparées (4a, 4b), caractérisé en ce que des faces, qui sont tournées l'une vers l'autre, des parties séparées (4a, 4b) possèdent des parties étagées de montage (6a, 6b) agencées avec des formes réciproquement complémentaires.
